Europäisches Patentamt

European Patent Office

Office européen des brevets

(19)

(11) Numéro de publication: **0 182 683**
**B1**

(12) **FASCICULE DE BREVET EUROPEEN**

(45) Date de publication du fascicule du brevet: 27.06.90

(51) Int. Cl.⁵: **G 01 V 1/40**

(21) Numéro de dépôt: 85402038.5

(22) Date de dépôt: 22.10.85

(54) **Procédé pour la détection de fractures du sous-sol à l'aide d'un outil acoustique.**

(30) Priorité: 22.10.84 FR 8416149

(43) Date de publication de la demande:
28.05.86 Bulletin 86/22

(45) Mention de la délivrance du brevet:
27.06.90 Bulletin 90/26

(84) Etats contractants désignés:
AT DE FR GB IT NL

(56) Documents cités:
US-A-3 775 739

PROCEEDINGS SWPLA SYMPOSIUM, 8-11
juillet 1980, pages 1-33; F.L. PAILLET: "Acoustic
propagation in the vicinity of fractures which
intersect a fluid-filled borehole"

Le dossier contient des informations techniques
présentées postérieurement au dépôt de la
demande et ne figurant pas dans le présent
fascicule.

(73) Titulaire: SOCIETE DE PROSPECTION
ELECTRIQUE SCHLUMBERGER
42, rue Saint-Dominique
F-75340 Paris Cédex 07 (FR)
(84) FR IT

(73) Titulaire: SCHLUMBERGER LIMITED
277 Park Avenue
New York, N.Y. 10172 (US)
(84) DE GB NL AT

(72) Inventeur: Cheung, Philip Siu-Yu
15 Indian Hill Lane
New Fairsfield Connecticut 06812 (US)

(74) Mandataire: Hagel, Francis
Etudes et Productions Schlumberger A
L'ATTENTION DU SERVICE BREVETS 26, rue de
la Cavée B.P. 202
F-92142 Clamart Cédex (FR)

(56) Documents cités:
JOURNAL OF PETROLEUM TECHNOLOGY,
aou7t 1978, pages 1199-1207, Society of
Petroleum Engineers of AIME, US; E.A.
KOERPERICH: "Investigation of acoustic
boundary waves and interference patterns as
techniques for detecting fractures"

Courier Press, Leamington Spa, England.

# EP 0 182 683 B1

**Description**

L'invention concerne la détection de fractures que présente le sous-sol, à partir d'un puits foré dans celui-ci.

La détection de fractures est intéressante à de nombreux titres. En prospection pétrolière, elle est est particulièrement importante: les zones de fracture ont de fortes chances de constituer des zones de production d'hydrocarbures, car le système de fractures procure un trajet de haute perméabilité, et constitue par conséquent un mécanisme de draînage efficace, à travers une roche réservoir qui, pour sa part, est dense et possède une faible perméabilité.

Beaucoup d'outils actuellement connus sont susceptibles, après interprétation convenable des mesures, de donner des indications sur la présence de fractures. Aucun d'entre eux ne le fait de manière véritablement satisfaisante.

Parmi les outils disponibles, une attention particulière a été portée aux outils à émission/réception acoustique (Sonic Tool). Des études ont été menées dans le but d'évaluer la possibilité de repérer en pratique des fractures, avec un tel outil. A cet égard, il est fait référence as aux publications suivantes: R. L. Morris, D. R. Grine and T. E. Arkfeld 1964. "The use of compressional and shear acoustic amplitudes for the location of fractures": J. Pet. Tech., 16, 623—635. E. A. Koerperich, 1978, "Investigation of Acoustic Boundary Waves and Interference Patterns as Techniques for Detecting Fractures": J. Pet. Tech., 30, 1199—1207. F. L. Paillet, 1980, "Acoustic Propagation in the Vicinity of Fractures which interest a Fluid-filled Borehole": Proceedings SPWLA Symposium, 1980, paper DD.

En particulier, l'article de "Journal of Petroleum Technology" par E. A. Koerperich décrit une analyse de formes d'onde pour la détection des fractures dans laquelle on effectue des mesures d'amplitude de pic à pic. Dans l'article de Proceedings SPWLA Symposium, F. L. Paillet propose, pour détecter les fractures, d'analyser les formes d'ondes en plusieurs portions au moyen de fenêtres pour séparer les ondes de cisaillement des ondes tubulaires.

Le brevet US—A—3 775 739 (Vogel) décrit aussi un procédé de détection de fractures verticales au moyen d'un appareil qui émet des ondes à haute fréquence autour de la circonférence du puits. Les ondes reçues sont détectées et des signaux se rapportant à l'ampitude de pic des ondes reçues sont enregistrés.

Les procédés connus jusqu'à présent font largement appel à l'interprétation par un spécialiste d'une représentation convenable des mesures effectuées par l'outil sonique. L'homme de l'art connaît les inconvénients d'un tel procédé.

C'est pourquoi il est vivement souhaitable d'accéder à une détection de fractures qui puisse être automatisée, fiable, et autant que possible dépourvue d'ambiguïté.

La présente invention a essentiellement pour but de fournir des moyens qui permettent d'atteindre cet objectif.

L'un des buts de la présente invention est d'obvier aus inconvénients des techniques antérieures de détection de fractures par atténuation d'amplitude des ondes sonores.

Un autre but de l'invention est d'obtenir une identification de fractures avec une résolution de profondeur qui soit bien meilleure que l'espacement entre émetteur et récepteur de sons.

Un troisième but de l'invention est de permettre l'évaluation objective de configuration à trajets multiples qui permettent l'identification de fractures.

Un autre but encore de l'invention est de fournir aux spécialistes des informations et/ou une représentation améliorées des mesures afin de bénéficier de la plus grande précision qu'apporte l'invention.

Selon l'invention, un procédé pour la détection des fractures dans le sous-sol, dans lequel on traite les formes d'ondes d'échos (WFn(z) qui ont été détectées dans un puits en fonction de la profondeur $z$ à l'aide d'un outil acoustique comportant des transducteurs acoustiques séparées pour l'émission et la réception avec $m$ espacements entre émetteurs et récepteurs, $n$ étant un indice variant 1 à $m$ et relatif audit espacement et $s_n$ désignant la longueur du demi-espacement correspondant, comprend les étapes suivantes:

a) extraire de chaque forme d'onde WFn(z), dans une fenêtre choisi de celle-ci, contenant les ondes de compression, une grandeur d'amplitude de compression de établir les courbes d'amplitude de compression An(z) correspondantes;

b) isoler de chaque courbe d'amplitude de compression An(z) les pointes d'amplitude de largeur voisine d'une valeur prédéterminée, de manière à établir les courbes de pointes d'amplitude Pn(z); et

c) déterminer la présence de fractures à partir d'une comparaison des courbes $Pn(z + s_n)$ d'une part et $Pn(z - s_n)$ d'autre part.

De préférence l'étape c) comprend:

c1) la détermination de deux courbes de coefficients de corrélation croisée T(z) et R(z) selon les relations:

$$[\ T(z)\ ]^m\ =\ \operatorname*{Prod}_{n\ =\ 1}^{n\ =\ m}\ [\ Pn(z+s_n)\ ]$$

$$[\ R(z)\ ]^m\ =\ \operatorname*{Prod}_{n\ =\ 1}^{n\ =\ m}\ [\ Pn(z-s_n)\ ]$$

c2) la détermination de la présence de fractures à partir des crêtes de la courbe T(z) et R(z).

Très avantageusement l'étape b) comprend:

b1) la détermination des courbes Mn(z) par filtrage en moyenne mobile des courbes d'amplitude An(z); et

b2) la détermination des courbes Pn(z) par soustraction stricte de Mn(z) dans An(z), avec

Pn(z) = An(z) − Mn(z) si An(z) > Mn(z) et
Pn(z) = 0
si An(z) < Mn(z)

Dans un mode de réalisation particulier de l'étape b1), le filtrage en moyenne mobile est réalisé à l'aide d'un filtre de médiane opérant sur cinq points.

En pratique, la valeur prédéterminée pour largeur des pointes d'amplitude correspond à environ une longeur d'onde de l'onde de compression, en particulier 0,3 m pour une fréquence d'onde de 16 kHz.

Par ailleurs, il est souhaitable que m soit au moins égal à 3.

Selon une autre particularité de l'invention, la grandeur d'amplitude est définie par le maximum de l'amplitude crête de la forme d'onde WFn dans ladite fenêtre.

Pour une observation par un spécialiste, le procédé peut comprende l'établissement d'une représentation conjointe des courbes T(z), R(z), et de préférence Pn(z), en fonction de la profondeur.

Le procédé de l'invention peut être complété par un procédé de traitement des portions de formes d'onde WFn qui sont représentatives des configurations croisées (en anglais "Criss-Cross patterns") dues à des conversions de mode.

D'autres caractéristiques et avantages de l'invention apparaîtront à l'examen de la description détaillée ci-après, ainsi que des dessins annexés, sur lesquels:

la figure 1 est un illustration schématique d'un outil dit LSS, propre à la mise en oeuvre de l'invention;

les figures 2A et 2B sont des chronogrammes illustrant respectivement une forme d'onde d'émission FE et une forme d'onde d'écho WFn;

la figure 3 est un diagramme illustrant les différentes étapes de la mise en oeuvre du procédé d'analyse par les pointes d'amplitude, dans un mode de réalisation particulier de celui-ci;

la figure 4 illustre, sous forme d'une représentation plane à effet tridimensionnel, un jeu de formes d'ondes reçues WFn,

les figures 4a et 4b illustrent des formes d'ondes reçues, ainsi que la traitement que celles-ci subissent par la mise en oeuvre du procédé d'analyse des pointes d'amplitude;

la figure 5 est un dessin très schématique illustrant certains phénomènes qui se déroulent au niveau d'une fracture;

les figures 5a et 5b sont des représentations de signaux captés qui mettent en évidence certains phénomènes utilés en relation avec les configurations croisées;

la figure 6 est un schèma illustrent le procédé de traitement dit "des configurations croisées" dans un exemple particulier;

la figure 7 montre certains résultats obtenus par le procédé de la figure 6; et

les figures 8a et 8b illustrent des résultats obtenus par mise en oeuvre conjointe des procédés des figures 3 et 6.

Il est entendu que la présente invention concerne un procédé de traitement des données issues d'un outil de diagraphie du type acoustique (quels que soient les modes d'acquisition des données faisant l'objet de traitement). Le traitemente est indépendant de l'acquisition et peut être effectué ultéierurement à cette dernière et en surface.

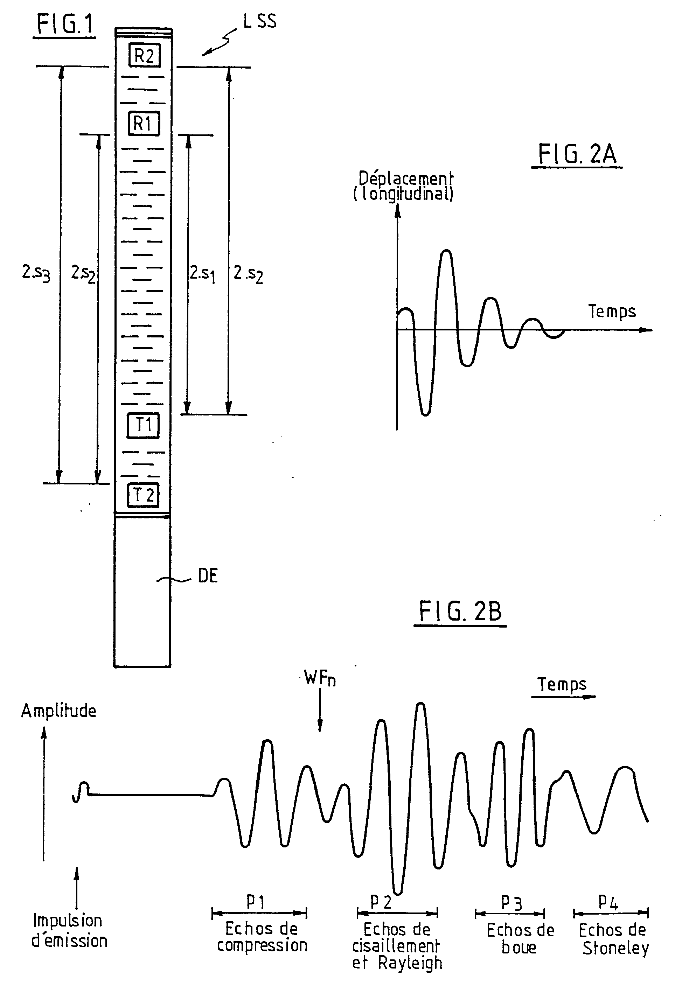

La figure 1 illustre ou outil émetteur/récepteur acoustique du type dit LSS (pour "Long Spacing Sonic Sonde", c'est-à-dire sonde acoustique à grand espacement).

Axialement, cette sonde comporte deux émetteurs acoustiques T1 et T2, en principe omnidirectionnels latéralement, espacés de deux récepteurs acoustiques également omnidirectionnels R1 et R2. Au-dessous des émetteurs est prévu un dispositif de déclenchement de l'émission et d'enregistrement des échos, noté globalement DE.

Cet outil permet de définir plusieurs espacements, à savoir:

un premier espacement $2.s_1$ entre l'émetteur T1 et le récepteur R1;

un autre espacement $2.s_2$ entre l'émetteur T1 et le récepteur R2, de même qu'entre l'émetteur T2 et le récepteur R1; et

un troisième espacement $2.s_3$ entre l'émetteur T2 et le récepteur R2.

Les demi-espacements $s_1$, $s_2$ et $s_3$ ont par exemple pour valeurs 1,22 mètre (4 pieds), 1,52 mètre (5 pieds) et 1,83 mètre (6 pieds).

La figure 2A illustre une forme d'onde d'émission qui sera appliquée à l'un et l'autre des émetteurs T1 et T2. La forme d'onde est appliquée successivement aux deux émetteurs, à des instants suffisamment distants pour éviter toute interférence au niveau des récepteurs R1 et R2, mais aussi suffisamment rapprochés pour que l'on puisse considérer que les échos obtenus sont relatifs à la même profondeur, compte tenu de la vitesse de déplacement de l'outil. Par ailleurs, la cadence de ce déclenchement séquentiel des deux émetteurs est choisie telle que l'on obtienne des informations sensiblement tous les 15 centimètres, dans l'échelle des profondeurs.

Les émetteurs T1 et T2 produisent des ondes acoustiques de compression, également denommées "longitudinales", par opposition aux ondes de cisaillement ou "transversales". En effet, seules les ondes longitudinales sont de nature à traverser le fluide qui remplit un puits sans atténuation excessive.

De même, les récepteurs R1 et R2 vont recevoir à travers le fluide du puits des échos sous forme d'ondes longitudinales. Mais, par l'interaction des parois du puits avec le sous-sol, ces échos pourront correspondre à différente autres types d'ondes qui se seront propagées dans le sous-sol.

Ainsi, la figure 2B montre qu'après l'impulsion d'émission la forme d'onde WFn d'un signal reçu comprend tout d'abord une portion $p_1$ qui est relative à des échos de compression, dûs notamment à l'aller-retour des ondes de compression à l'intérieur du fluide contenu dans le puits, après réflexion par les parois de celui-ci.

Il invervient ensuite, dans une section $p_2$ de la forme d'onde WFn des échos de cisaillement, dits également de Rayleigh. Une partie significative du signal émis sous forme d'onde de compression va entrer dans le sous-sol, et se propager dans celui-ci sous la forme d'ondes de cisaillement, qui peuvent pénétrer à l'intérieur de la matière solide, et également sous la forme d'ondes dites de Rayleigh, qui, pour leur part, se propagent au voisinage d'un interface solide/liquide (ou solide/gaz). Ces ondes se distinguent les unes des autres par des vitesses de propagation différentes, d'où un durée différente de leurs alternances. Il existe également des ondes dites pseudo-Rayleigh, qui apparaissent du fait que l'énergie acoustique tend à s'écarter de l'interface (donnant lieu aux ondes de Rayleigh) dès lors que des ondes de compression s'établissent dans la boue de forage. La portion $p_3$ de la forme d'onde WFn fait ensuite apparaître des échos dits de boue.

L'homme de l'art sait que, à l'inverse des ondes de compression et de cisaillement, qui se propagent dans un milieu infini, les ondes de Rayleigh et pseudo-Rayleigh ne se propagent que dans un milieu fini, c'est-à-dire qu'il s'agit d'ondes guidées.

Un troisième type d'ondes guidées apparaît dans un forage, et se manifeste dans la portion $p_4$ de la forme d'onde WFn. Il s'agit des échos ou ondes de Stoneley, qui s'établissent dans la boue par interaction entre celui-ci et les formations du sous sol. Les fréquences les plus basses des ondes de Stoneley sont également appelées ondes tubulaires.

Il à déjà été proposé d'utiliser l'atténuation qui se manifeste dans les formes d'ondes enregistrées par un outil acoustique, dans le but de repérer les fractures, présentes dans le sous-sol.

Mais on comprend aisément, compte tenu notamment du grand nombre de types différents d'ondes qui interviennent, qui l'interprétation des mesures est très délicate.

La Demanderesse a observé notamment que l'atténuation du signal reçu peut être aussi bien produite par des fractures que par d'autres inhomogénéités dans la formation. De plus, la résolution en profondeur que l'on pouvait obtenir par l'étude de l'atténuation est relativement modeste.

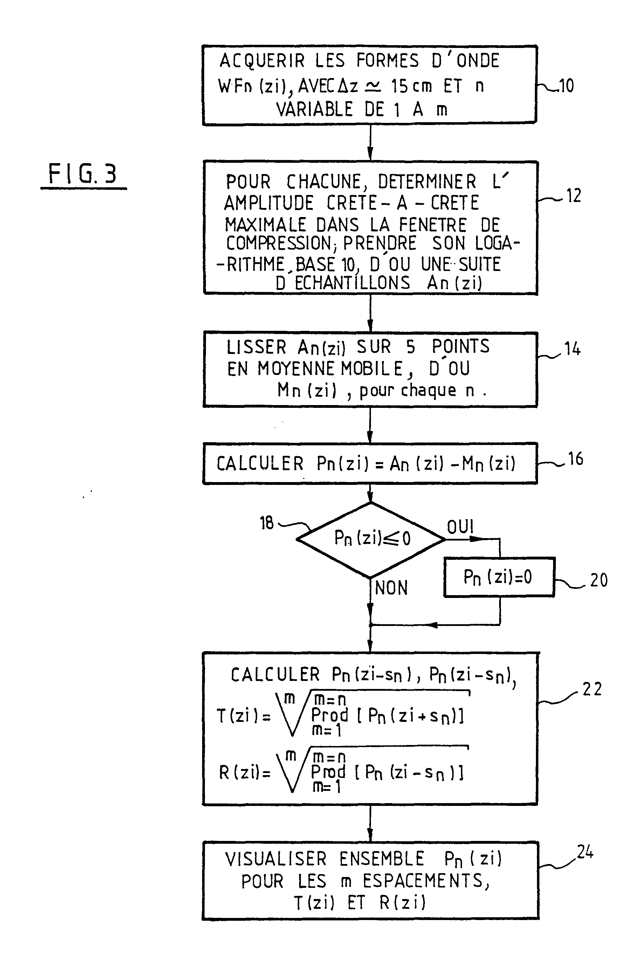

On décrira maintenant en référence à la figure 3 un procédé qui permet d'améliorer considérablement la détection de fractures, en se fondant au contraire sur l'élévation locale du couplage acoustique entre le fluide du forage et les formations du sous-sol qu'on a pu observer au voisinage de fractures.

Pour la mise en oeuvre du procédé, on descend dans le puits, de manière repérée, un outil émetteur/récepteur acoustique tel que celui illustré sur la figure 1, ou en variante un autre outil, par exemple celui connu sous le nom de Digital Sonic Tool. Il est considéré comme souhaitable que ce outil permette d'accéder à au moins trois espacements entre émetteur et récepteur, pour chaque niveau de profondeur où l'on va rechercher une forme d'onde, et que ces espacements soient supérieurs au mètre.

Au cours de la descente, on produit répétitivement l'émission acoustique de l'outil, soit pour l'un des ces transducteurs, soit pour chacun de ces transducteurs, en succession, comme défini plus haut. On enregistre à chaque fois la forme d'onde d'écho WFn reçue par les récepteurs de l'outil, en relation avec les espacements. Il y a donc en principe une forme d'onde pour chaque espacement et pour chaque profondeur, d'où l'écriture WFn(z).

Comme décrit en relation aux figures 2A et 2B, les échos résultent du couplage acoustique de l'outil au sous-sol à travers le fluide ou boue emplissant le puits.

Compte tenu du fait que les données reçues sont échantillonnées en profondeur, on noter maintenant les formes d'ondes par $WFn(z_i)$. L'écart entre deux profondeurs d'échantillonnage, $z_{i+1} - z_i = \Delta z$ est de l'ordre de 15 centimètres et l'indice n qui représente les espacements est variable de 1 à m avec m au moins égal à 3.

Ces informations sont en principe transmises en surface, où les formes d'ondes sont alors acquises, comme le rappelle l'étape 10 de la figure 3.

Intervient ensuite une étape 12, qui consiste, pour chacune des formes d'ondes $WFn(z_i)$, à déterminer l'amplitude crête à crête maximale que présente cette forme d'onde dans sa fenêtre de compression. La fenêtre de compression est aisèment repérable comme on l'a vu en référence à la figure 2B. On peut prendre l'amplitude maximale crête à crête soit sur tous les cycles compris dans cette fenêtre de compression, soit, plus simplement, déterminer l'amplitude maximale à partir de celle de la seconde ou troisième alternance présente dans la fenêtre de compression ($p_1$ figure 2B), ou encore la somme de celles-ci. De préférence, l'information d'amplitude ainsi obtenue, qui est rapportée à un espacement et à une profondeur, est transformée en son logarithme, par exemple décimal. Il en résulte une suite d'échantillons logarithmiques $An(z_i)$, ce que termine l'étape 12 de la figure 3.

Une telle suite d'échantillons s'analyse comme un tableau de grandeurs numérques. En l'espèce, on a m suites d'échantillons numériques associées respectivement à des profondeurs croissantes. Pour simplifier l'exposé, on appelle ici courbe chaque suite d'échantillons définie en relation avec la profondeur.

La suite de procédé consiste alors à isoler de chaque courbe d'amplitude de compression $An(z_i)$, les pointes d'amplitude qui ont une largeur voisine d'une valeur prédéterminée. Il semble actuellement souhaitable de définir cette largeur prédéterminée comme correspondant à environ une longueur d'onde de l'onde acoustique de compression dans le sous-sol, ce qui donne en particulier 0,3 mètre (1 pied) pour une onde acoustique de 16 kHz.

Ceci fournit des courbes de pointes d'amplitude $Pn(z_i)$ associées aux différents espacements. La présence de fractures est alors déterminée à partir des courbes $Pn(z + s_n)$ d'une part et $Pn(z - s_n)$ d'autre part, $s_n$ désignant le demi-espacement.

Ceci sera maintenant décrit de manière plus précise en se référant à nouveau à la figure 3.

Après l'étape 12, l'étape 14 consiste à lisser par filtrage en moyenne mobile, chacune des courbes d'amplitude $An(z_i)$, ce qui fournit autant de courbes $Mn(z_i)$. Ce lissage s'effecteu en tenant compte des pointes d'amplitude que l'on veut conserver dans le signal.

Typiquement, pour un échantillonnage en profondeur tous les 15 centimètres, il est apparu convenable d'effecteur le lissage de l'étape 14 à l'aide d'un filtre de médiane opérant sur cinq points de profondeur, c'est-à-dire deux points de part et d'autre du point concerné, en plus de celui-ci. Des filtres de médianes sont décrits dans l'article de J. B. Bednar, 1983, "Applications of Median Filtering to Deconvolution, Pulse Estimation, and Statistical Editing of Seismic Data": Geophysics, 48, pp. 1598 à 1610.

L'étape 16 consiste alors à déterminer la différence algébrique, provisoirement notée $Pn(z_i)$ entre $An(z_i)$ et $Mn(z_i)$.

Ensuite, un test 18 détermine si cette différence est positive ou négative ou nulle. Si elle est positive, on conserve à $Pn(z_i)$ la définition que lui donne l'étape 16. Si la différence est negative ou nulle, on affecteà $Pn(z_i)$ la valeur 0, à l'étape 20. Ceci peut être considéré comme la soustraction stricte, c'est-à-dire arithmétique, de $Mn(z_i)$ à $An(z_i)$.

Ainsi a pu être déterminée la courbe de pointes d'amplitude de $Pn(z_i)$.

Comme on dispose de préférence de plusieurs espacements, l'étape 22 va non seulement calculer tout d'abord les courbes $Pn(z_i - sn)$ et $Pn(z_i + sn)$, mais aussi utiliser ensuite ces courbes pour effectuer une comparaison entre les résultats relatifs aux différents espacements. De préférence, cette comparison s'effectue sous la forme du calcul de deux coefficients de corrélation, fonction de la profondeur, et notés respectivement $T(z_i)$ et $R(z_i)$. Ces coefficients sont donnés par les relations suivantes:

$$[\ T(z)\ ]^m = \operatorname{Prod}_{n=1}^{n=m} [\ Pn(z+s_n)\ ]$$

$$[\ R(z)\ ]^m = \operatorname{Prod}_{n=1}^{n=m} [\ Pn(z-s_n)\ ]$$

Comme on le verra mieux plus loin sur un exemple, la Demanderesse a observé que les crêtes dans les courbes $T(z_i)$ et $R(z_i)$ indiquent les emplacements de couplage acoustique augmentés, c'est-à-dire de fractures. La résolution verticale de ce procédé est de l'ordre de la largeur d'une crête, c'est-à-dire typiquement 0,3 mètre (1 pied). On note que, par opposition à la technique antérieure, le procédé de l'invention aboutit à une résolution en profondeur qui est bien meilleure qui l'espacement entre émetteur et récepteur.

Le procédé peut alors se terminer par une étape 24, qui consiste à visualiser conjointement les deux grandeurs $T(z_l)$ et $R(z_l)$, de préférence avec les courbes de pointes d'amplitude $Pn(z_l)$ valables pour les m espacements que permet l'outil.

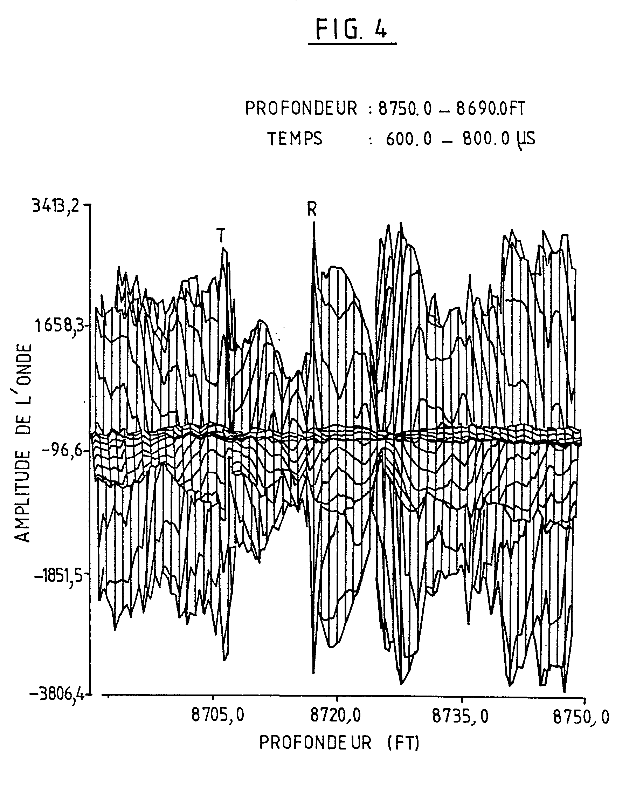

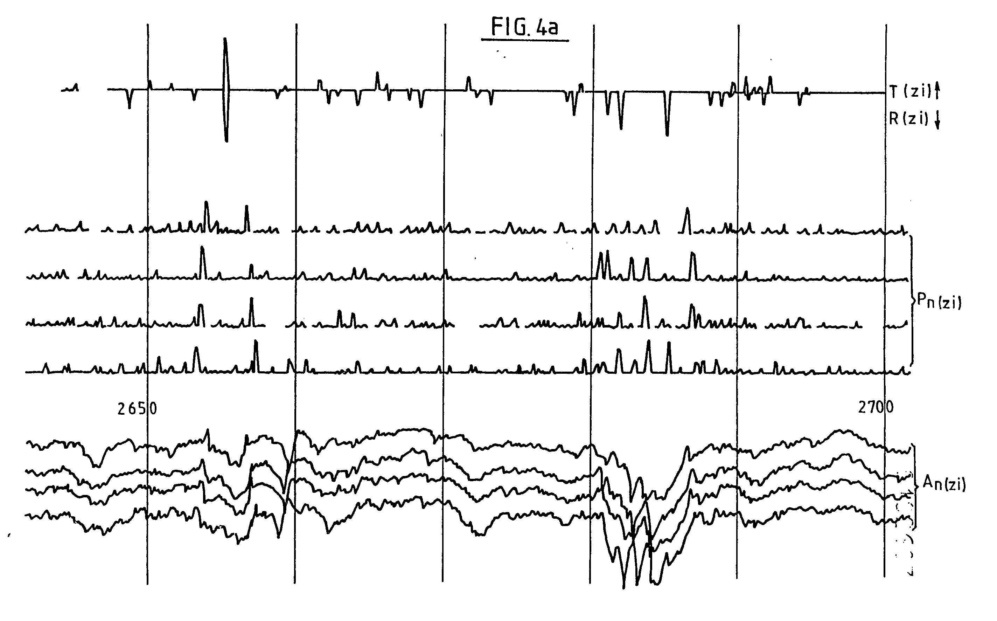

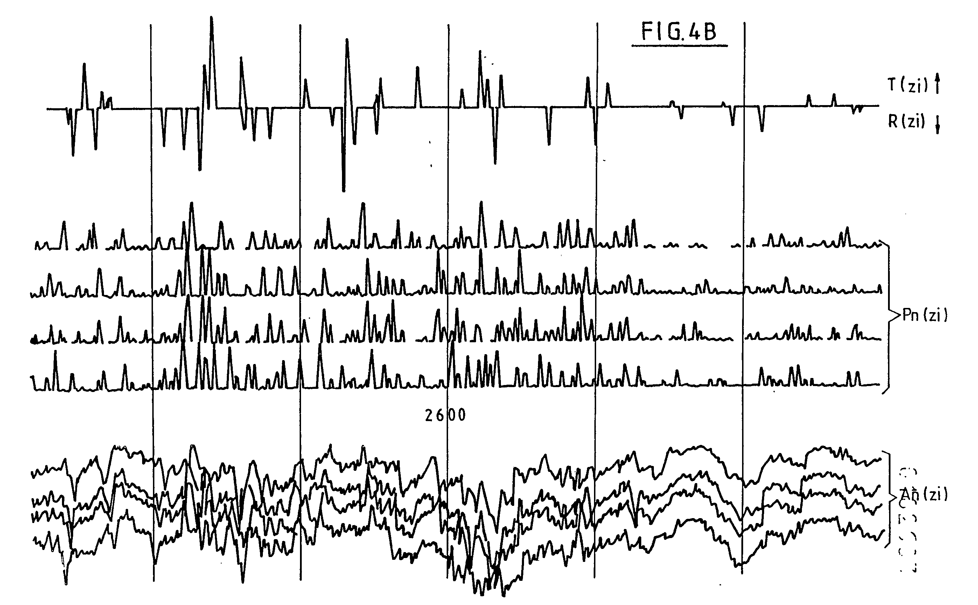

Un exemple particulier sera maintenant discuté en référence aux figures 4, 4a et 4b.

La figure 4 donne, en représentation tridimensionnelle, des formes d'ondes recueillies par un outil du genre précité.

L'échelle horizontale est la profondeur, l'échelle verticale est l'amplitude de l'onde, tandis que des formes d'ondes relatives à plusieurs temps différents, échantillonnées de 600 à 800 microsecondes, sont illustrées conjointement. On voit immédiatement la difficulté d'interprétation de telles courbes pour l'homme de l'art, même expérimenté.

Sur la figure 4a, la partie basse illustre l'amplitude des quatre formes d'ondes obtenues avec l'outil LSS, pour les espacements de 8 et 10, 10 et 12 pieds en échelle logarithmique.

La partie intermédiaire de la figure 4a illustre les courbes de crêtes $Pn(z_l)$.

La partie haute illustre les courbes $T(z_l)$ et $R(z_l)$ en regard l'une de l'autre.

La section illustrée sur la figure 4 correspond en fait à la région qui se trouve autour de la profondeur 2655 mètres sur la figure 2A. Il apparaît que l'amplitude des quatre formes d'ondes manifeste le comportement décrit plus haut, à savoir que:

l'amplitude montre deux pointes positives à des positions où l'émetteur ou le récepteur se trouve adjacent à la fracture (ces points sont marqués T et R respectivement sur la figure 4);

le niveua général d'amplitude se trouve diminué entre ces deux pointes.

Effectivement, pour chaque espacement, on obtient deux pointes à 2655, 3 mètres, plus ou moins le demi-espacement, et les courbes T et R montrent deux pointes importantes (3 décibels) à cette profondeur. Ces pointes manifestent donc une fracture horizontale isolée.

Mais, dans la section comprise entre 2680 et 2687 mètres sur la figure 4a, il y a une forte atténuation d'amplitude, qui s'étend sur une zone plus large que l'espacement émetteur/récepteur. Trois pointes de récepteurs (deux intenses, l'une plus faible) sont observées. Ceci suggère une zone fracturée qui contient au moins trois emplacements de couplage acoustique augmenté.

La section qui va des profondeurs 2688 à 2693 suggère la présence d'une fracture verticale. En effet, et c'est là un autre aspect avantageux de l'invention, la procédé décrit permet aussi la détection de fractures verticales, que la technique antérieure considérait comme pratiquement inopérantes quant à l'atténuation sur les échos reçus.

Bien que les phénomènes ne soient pas simples à modéliser, la Demanderesse pense que, très schématiquement, des pointes intenses sont en principe indicatrices de fractures horizontales, tandis qu'une série de petites pointes semble indiquer une fracture verticale, dès lors qu'elles ne sont pratiquement pas accompagnées d'une atténuation des échos reçus.

On se réfère maintenant à la figure 4b, qui vient se rattacher à la figure 4a du côté des profondeurs faibles. Il apparaît, dans la section comprise entre 2570 et 2610 mètres, une zone où l'amplitude change de manière tout à fait erratique. Toutfois, l'analyse de crête réduit ce magma d'informations en un petit nombre de pointes intenses, qui sont indicatrices d'une collection de zones de fracture isolées.

D'autres aspects de ce procédé seront discuités plus loin.

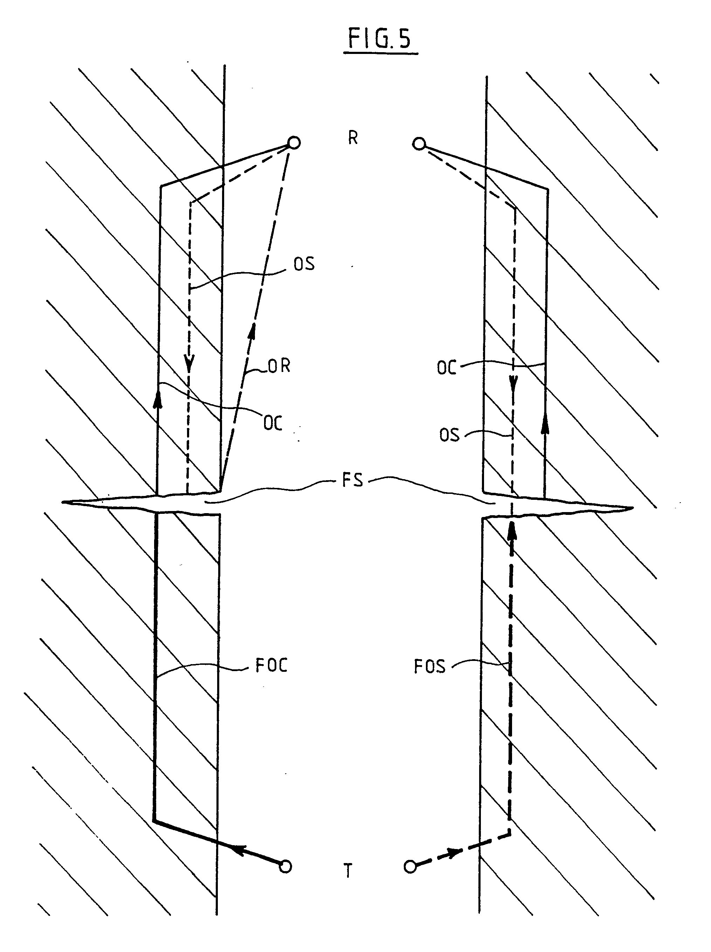

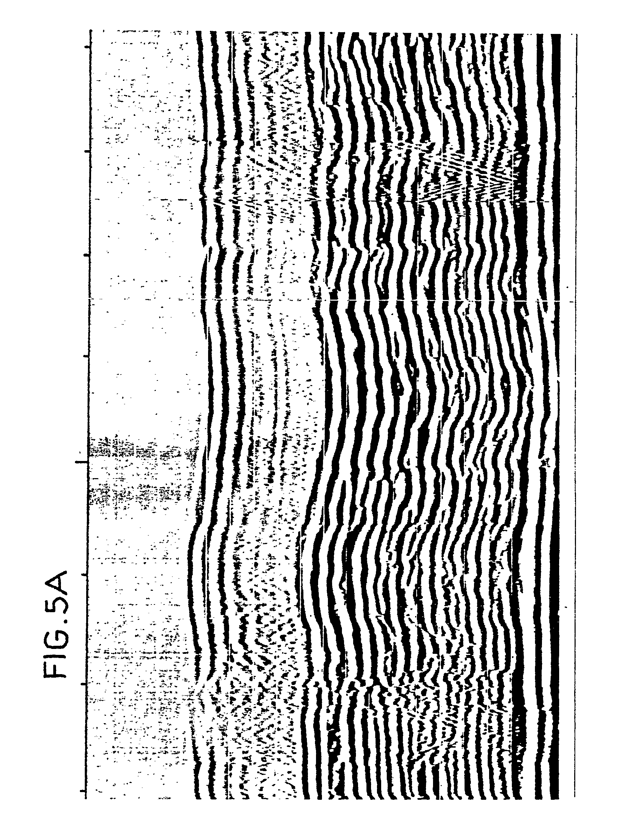

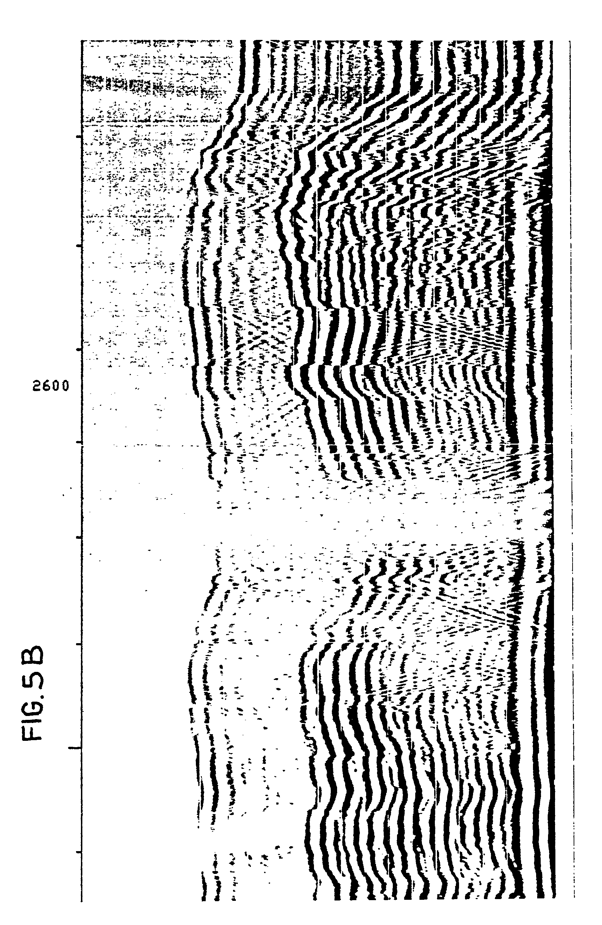

Auparavant, il est fait référence à la figure 5, laquelle explicite les conversions de modes de propagation qui peuvent se produire au niveau d'une fracture FS du sous-sol.

Il s'agit là uniquement d'illustrer les effets d'une fracture, étant observé qu'une conversion de mode se produit chaque fois que l'onde recontre une frontière qui sépare des zones de fort contraste acoustique. Toutefois, il est estimé que les fractures vont produire des conversions de modes particulièrement intenses, tout spécialement entre les modes relatifs à la formation et ceux relatifs au forage. Les raisons en sont les mêmes que celles qui président au couplage acoustique augmenté que l'on a décrit plus haut.

Dans la partie gauche de la figure 5, un front d'onde de compression FOC rencontre la fracture FS, située entre l'émetteur T et le récepteur R. Une partie de l'énergie incidente FOC va demeurer sous la forme d'une onde de compression, pour arriver un récepteur R. Une autre partie va se trouver convertie en onde de cisaillement OS, ou encore en une onde OR de l'un des modes guidés par le forage, à savoir Rayleigh, pseudo-Rayleigh ou Stoneley.

Ces ondes sont détectées par le récepteur R. Les ondes de cisaillement et les ondes guidées vont arriver après les ondes de compression OC qui sont demeurées telles de l'émetteur au récepteur, mais avant les modes correspondants de cisaillement ou guidé qui auront voyagé directement de l'émetteur au récepteur.

Lorsque l'outil se déplace vers le haut, le temps d'arrivée de ces échos "à conversion de mode" va augmenter à partir du temps de pure compression, pour aller jusqu'au temps de pur mode cisaillement ou guidé, au fur et à mesure que la fraction du trajet des ondes qui aura fait l'objet d'une conversion s'accroît de 0 à 1.

Les échos qui résultent d'une conversion d'un mode rapide à un mode lent (en terms de vitesse de propagation) constituent donc les bras sud-ouest à nord-est des X que forme la configuration croisée.

Les bras nord-ouest à sud-est des X sont expliqués à l'aide d'un processus analogue illustré dans la partie de droite de la figure 5. Ici, l'énergie est convertie depuis un mode lent à un mode rapide au niveau de la fracture. Plus précisément, un front d'ondes de cisaillement, noté FOS, qui arrive au niveau de la fracture FS, va se trouver pour partie transformé en ondes de compression OC, donc plus rapides. Une partie de l'énergie peut demeurer sous la forme d'une onde de cisaillement OS plus lente. On observe donc bien une conversion d'un mode lent à un mode rapide.

Si maintenant on note par v et u les vitesses respectives de propagation des modes rapide et lent, et que celles-ci sont constantes à l'intérieur de l'espacement émetteur/récepteur, alors la pente p (la dérivée du temps par rapport à la profondeur) des bras de la configuration en X possèdera l'amplitude:

$$1/u - 1/v,$$

qui est indépendante de l'espacement.

Les figures 5a et 5b font apparaître des manifestations typiques de configurations croisées. La Demanderesse a pu observer que leurs traits principaux sont les suivants:

la configuration s'étend sur une profondeur égale à l'espacement émetteur/récepteur;

chaque configuration est constituée de plusieurs croix ou X qui sont superposés aux échos directs;

dans la direction de profondeur, les bras de X recouvrent toujours l'espacement émetteur/récepteur;

dans la direction temps, les bras des X commencement soit dans la région des échos decompression, soit dans celle des échos de cisaillement, et se terminent dans la région des échos de cisaillement ou pseudo-Rayleigh, ou bien des échos de Stoneley, respectivement.

Bien entendu, des configurations croisées, comme illustrées sur les figures 5a et 5b, sont accessibles à l'observation visuelle directe. Mais cela est apparu insuffisant pour différentes raisons que l'homme de l'art connaît bien:

l'influence subjective liée notamment à la qualité de la visualisation à densité variable, ainsi que du choix des niveaux de gris;

difficulté pour l'observateur, même entraîné, de faire abstraction du côté relatif des configurations croisées, qui doivent être rapportées au niveau du signal de fond. Or, en fait, les configurations croisées se présentent souvent lorsque les échos directs sont faibles. Il en résulte que les configurations croisées sont souvent sous-estimées, et même qu'elles passent quelquefois inaperçues.

Ainsi, un second aspect de l'invention prévoit que l'on effectue sur les signaux relatifs aux configurations croisées, un traitement qui comprend la détermination de l'amplitude et de l'énergie propre à ces configurations croisées, relativement à l'amplitude ou l'énergie des échos directs.

Il est préférable, mais pas absolument nécessaire, que les portions des formes d'ondes $WF_n$ qui sont prises en compte soient celles qui sont dues aux mondes de compression, et se terminent au premier écho du type onde cisaillement ou onde pseudo-Rayleigh.

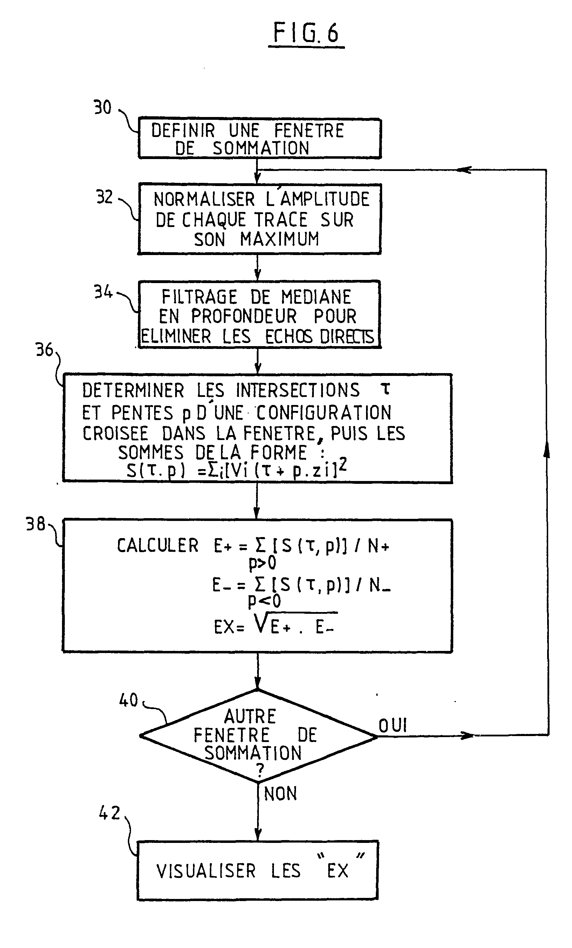

Il est maintenant fait référence à la figure 6.

La première étape du procédé relatif aux configurations croisées, étape notée 30, consiste à définir une fenêtre de sommation qui recouvre l'espacement émetteur/récepteur, et se trouve comme on vient de la dire définie entre les échos de compression, et la montée du premier écho de type pseudo-Rayleigh ou cisaillement (voir figure 2B).

En pratique, pour chaque profondeur, on inclut dans la fenêtre de sommation les parties de formes d'ondes qui se situent de chaque côté des limites, jusqu'à concurrence de la moitié de l'espacement émetteur/récepteur. Par exemple, pour un espacement de 3 mètres (10 pieds), on utilisera 21 formes d'ondes, échantillonnées à 15 centimètres, pour effecteur les différents calculs à une profondeur donnée, jusqu'à arriver à la grandeur EX définie plus loin. A noter que l'information ainsi obtenue n'est pas équivalente à l'amplitude An(z) mentionnée plus haut.

Ensuite, l'étape 32 consiste à normaliser l'amplitude de chaque trace sur son maximum, qui est arbitrairement fixé à 1. Ceci assure que l'on donnera sensiblement le même poids à toutes les traces dans la sommation, et en même temps que toutes les amplitudes dans une trace donnée seront rapportées à l'écho direct le plus intense.

L'étape 34 consiste alors à appliquer un filtrage en profondeur pour éliminer les échos directs. Ce filtragé est de préférence un filtrage de médiane, qui est moins critique que le précédent, et peut porter sur cinq ou sept points en profondeur.

On passe ensuite à l'étape 36, qui consiste à déterminer les interceptions temporelles $\tau$ et pente p d'une configuration croisée qui se trouverait dans le fenêtre.

A partir de là, on peut construire des sommes de la forme:

$$S(\tau,p) = \Sigma_i \, V_i[(\tau + p.z_i)]^2$$

où $V_i(t)$ et l'amplitude de la forme d'onde FWn en fonction du temps à la profondeur $Z_i$, $\tau$ est l'interception (ou intersection) de la ligne de sommation avec la trace ou forme d'onde considérée dans le temps, tandis que p est la pente de cette même ligne de sommation.

L'homme de l'art comprendra que cette sommation d'amplitudes correspond aussi à une sommation d'énergies. En pratique, on utilise un jeu limité de lignes de sommations qui présentent les pentes et intersections temporelles appropriées, tout en s'étendant sur la fenêtre de sommation définie à l'étape 20.

Chaque somme correspond donc à un bras qui est soit ascendant, soit descendant, dans l'un des X que comporte la configuration croisée, s'il en existe une.

L'étape 38 va alors consister à faire la somme des énergies E+ relatives aux bras montants, c'est-à-dire ceux dont la pente p est positive, ainsi que la somme E−, relative aux bras descendants, dont la penter est négative. Les énergies sont dans chaque cas rapportées au nombre d'échantillons considérés, qui sont notés N+ et N− respectivement. Chacune de ces grandeurs N est définié comme le produit du nombre de niveaux situés dans la fenêtre de sommation, par le nombre de lignes de sommation utilisées.

On peut alors déterminer l'énergie totale EX contenue du fait de la conversion de mode dans la configuration croisée, en faisant la moyenne géométrique des grandeurs E+ et E−.

En présence d'une configuration croisée, l'énergie EX ne sera pas nulle. Son intensité représente en fait la proportion de l'énergie acoustique totale qui aura fait l'objet d'une conversion de mode, d'où d'une part la possibilité de détecter une fracture, d'autre part celle d'en apprécier éventuellement l'importance.

Bien entendu, une étape 40 va tester s'il existe une autre fenêtre de sommation possible, auquel cas les étapes 32 à 38 sont répétées avec cette ou ces autres fenêtres de sommation.

Au terme du procédé, une étape 42 va permettre une visualisation de l'énergie EX déterminée à chaque fois, en fonction du paramètre restant, à savoir la profondeur.

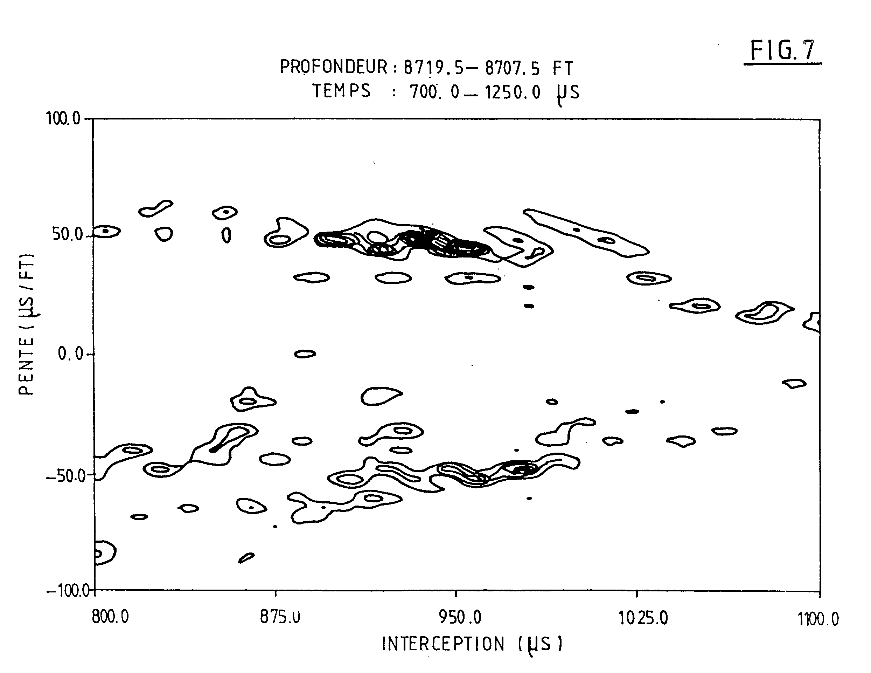

La figure 7 fait apparaître l'énergie S soummée en oblique, pour une position de fenêtre qui est à peu près centrée sur la configuration illustrée à la profondeur 2655 mètres, pour un espacement de 3,60 mètres (12 pieds). Cette figure couvre une gamme étendue de valeurs de la pente et de l'interception temporelle.

Il apparaît enfait que S est concentré sur deux bandes étroites, qui présentent les caractéristiques suivantes:

pente de plus ou moins 50 microsecondes par pied, qui est la pente de la ligne joignant l'écho de compression au premier écho du type pseudo-Rayleigh/cisaillement.

valeur de l'intersection temporelle qui se situe pratiquement entre 900 et 1000 microsecondes, ce que correspond au temps d'arrivée des échos de compression.

Des mesures ont été faites avec une fenêtre déplacée de 15 centimètres (6 pouces) vers le haut. Le résultat (non représenté) à été que les lobes situés à plus ou moins 50 microsecondes par pied sont décalés horizontalement vers la gauche et la droite respectivement de 25 microsecondes. Lorsque la fenêtre est déplacée vers le bas de 15 centimètres, ils sont à nouveau décalés horizontalement de 25 microsecondes, mais dans la direction opposée.

Ces dernières observations montrent bien que les lobes observés dans la grandeur S de la figure 7 correspondent effectivemente aux bras d'un X dans la configuration croisée.

Ceci indique également, en pratique, dans quelle mesure la grandeur EX s'écartera de sa valeur maximum lorsque la fenêtre de sommation n'est pas en alignement exact avec la configuration croisée.

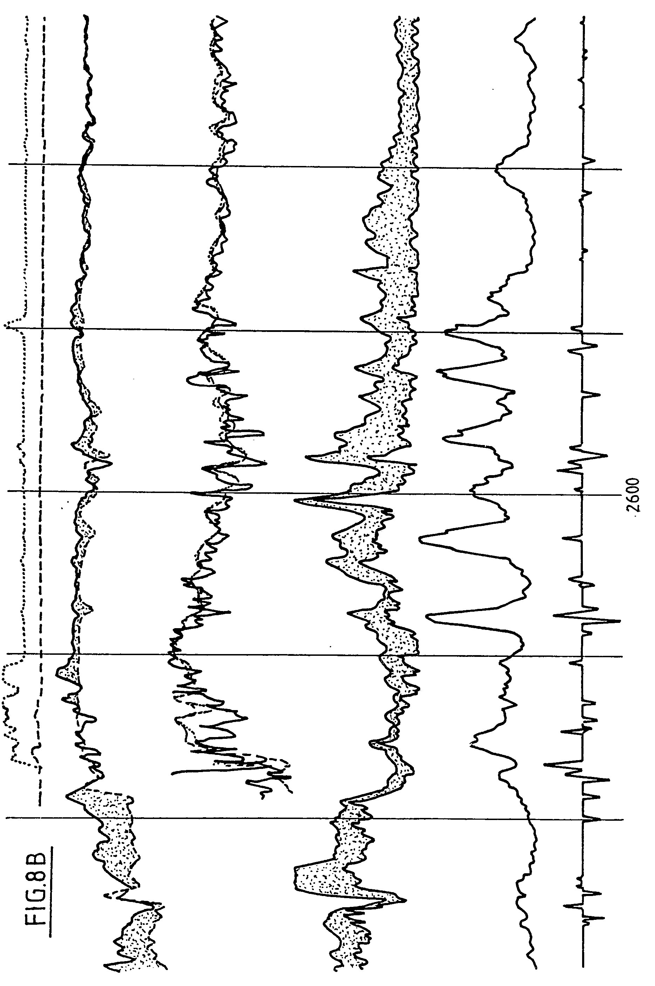

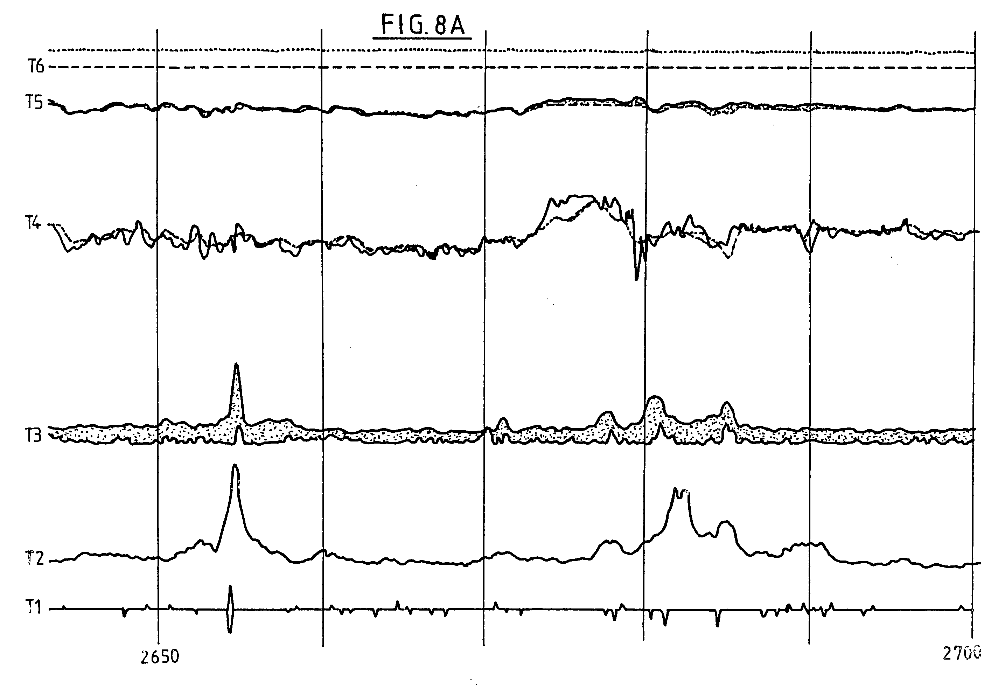

Les figures 8a et 8b qui complètent la précédente aux profondeurs plus faibles, montrent de manière combinée les résultats des procédés qui forment les deux aspects de l'invention.

Tout à fait en bas sont illustrées les grandeurs T(z) et R(z) obtenues comme précédemment décrit.

Immédiatement au-dessus est illustrée l'évolution de la grandeur d'énergie de configuration croisée EX obtenue pour l'espacement de 3 mètres (10 pieds).

Au-dessus sont illustrées d'autres mesures sur lesquelles on reviendra plus loin.

Les figures 8a et 8b correspondent par ailleurs, respectivement, aux figures 5a et 5b. En ce qui concerne les configurations croisées, il y a un bon accord entre les figures 5 et 8, là où les configurations croisées étaient d'ores et déjà clairement visibles dans la représentation à densité variable. Aux endroits où les échos directs sont faibles, et où les configurations croisées éventuelles sont difficiles à discerner, on observe malgré tout une réponse très nette au niveau de la grandeur EX. Cela constitue un avantage important du procédé selon le second aspect de l'invention.

Par ailleurs, les résultats des procédés qui forment les deux aspects de l'invention sont en bon accord l'un avec l'autre, puisque tout pic dans la grandeur EX coïncide d'une manière générale avec un pic individuel ou une rafale de pics dans les grandeurs T et R.

On observe que la grandeur EX, toutfois, n'a pas une résolution verticale (en profondeur) aussi bonne que les pics des grandeurs T et S. La résolution de la grandeur EX est alors estimée de l'ordre de 60 centimètres (2 pieds) pour un intervalle d'échantillonnage de 15 centimètres (6 pouce). Toute-fois, on peut obtenir une meilleure résolution en prenant un intervalle d'échantillonnage en profondeur plus fin.

Du bas vers le haut, les figures 8a et 8b comportent également quatre autres pistes d'enregistrement, qui représentent respectivement:

pour la piste T3

rayonnement gamme naturel — total
— corrige (c'est-à-dire uranium supprimé)

pour la piste T4

résistivité de la formation en mode respectivement profond (pointillés), superficiel (tiretés) et ponctuel (continus).

pour la piste T5

densité RHOB de la formation, par outil à rayonnement gamma,
porosité NPHI de la formation, par outil à rayonnement gamma.
pour la piste T6

mesure du diamétre du puits, par outil à rayonnement gamma (pointillés longs).
densité relative DRHO mesurée à 2 espacements différents (pointillés courts).

L'homme de l'art compendra que les procédés selon la présente invention sont tout à fait complémentaires, et qu'ils apportent des informations que les moyens de la technique antérieure ne savaient pas fournir, mais aussi qu'ils peuvent néanmoins, comme cela est courant dans l'étude du sous-sol, se compléter avec eux.

**Revendications**

1. Procédé pour la détection des fractures dans le sous-sol, dans lequel on traite les formes d'ondes d'échos (WFn(z) qui ont été détectées dans un puits en fonction de la profondeur $z$ à l'aide d'un outil acoustique comportant des transducteurs acoustiques séparés pour l'émission et la réception avec $m$ espacements entre émetteurs et récepteurs, $n$ étant un indice variant de 1 à $m$ et relatif audit espacement et $s_n$ désignant la longueur du demi-espacement correspondant, caractérisé par les étapes suivantes:

a) extraire de chaque forme d'onde WFn(z), dans une fenêtre choisi de celle-ci, contenant les ondes de compression, une grandeur d'amplitude de compression de établir les courbes d'amplitude de compression An(z) correspondantes;

b) isoler de chaque courbe d'amplitude de compression An(z) les pointes d'amplitude de largeur voisine d'une valeur prédéterminée, de manière à établir les courbes de pointes d'amplitude Pn(z); et

c) déterminer la présence de fractures à partir d'une comparaison des courbes Pn(z + $s_n$) d'une part et P(z − $s_n$) d'autre part.

2. Procédé selon la revendication 1, caractérisé par le fait que l'étape c) comprend:

c1) déterminer deux courbes de coefficients de corrélation croisée T(z) et R(z) selon les relations:

$$[ \ T(z) \ ]^m \ = \ Prod \ \begin{matrix} n = m \\ \\ n = 1 \end{matrix} \ [ \ Pn(z+s_n) \ ]$$

$$[ \ R(z) \ ]^m \ = \ Prod \ \begin{matrix} n = m \\ \\ n = 1 \end{matrix} \ [ \ Pn(z-s_n) \ ]$$

c2) déterminer la présence de fractures à partir des crêtes de la courbe T(z) et R(z).

3. Procédé selon l'une des revendications prédédentes caractérisé par le fait que l'étape b) comprend:

b1) déterminer les courbes Mn(z) par filtrage en moyenne mobile des courbes d'amplitude An(z); et

b2) déterminer les courbes Pn(z) par soustraction stricte de Mn(z) dans An(z), avec

Pn(z) = An(z) − Mn(z) si An(z) > Mn(z) et
Pn(z) = 0 si An(z) < Mn(z)

4. Procédé selon la revendication 3, caractérisé par le fait que le filtrage en moyenne mobile est réalisé à l'aide d'un filtre de médiane opérant sur cinq points.

5. Procédé selon l'une des revendications précédentes, caractérisé par le fait que ladite valeur prédéterminée pour la largeur des pointes d'amplitude correspond à environ une longueur d'onde de l'onde de compression, en particulier 0,3 m pour une fréquence d'onde de 16 kHz.

6. Procédé selon l'une des revendications précédentes, caractérisé par le fait que m est au moins égal à 3.

7. Procédé selon l'une des revendications précédentes, caractérié par le fait que ladite grandeur d'amplitude est définie par le maximum de l'amplitude crête à crête de la forme d'onde WFn dans ladite fenêtre.

**Patentansprüche**

1. Verfahren zum Festellen von Frakturen im Untergrund, bei dem man die Echowellenformen WFn(z) verarbeitet, die in einem Bohrloch in Funktion der Tiefe $z$ mit Hilfe eines akustischen Geräts ermittelt worden sind, das getrennte akustische Wandler für Aussendung und Empfang mit $m$ Abständen zwischen Sendern und Empfängern umfaßt, wobei $n$ ein von 1 bis $m$ bezüglich des Abstands variabler index ist und $s_n$ die Länge des entsprechenden Halbabstands bezeichnet, gekennzeichnet durch die folgenden Schritte:

a) Extrahieren aus jeder Wellenform WFn(z), in einem von dieser gewählten Kompressionswellen enthaltenden Fenster, einer Kompressionsamplitudengröße und Etablieren der entsprechenden Kompressionsamplitudenkurven An(z),

b) Isolieren, von jeder Kompressionsamplitudenkurve An(z), der Amplitudenpunkte mit einer Breite nahe einem vorbestimmten Wert, um so die Amplitudenpunktkurven Pn(z) zu etablieren, und

c) Festellen der Vorhandenseins von Frakturen, ausgehend von einem Vergleich der Kurven Pn(z + $s_n$) einerseits und Pn(z −1 $s_n$) andererseits.

2. Verfahren nach Anspruch 1, dadurch gekennzeichnet, daß der Schritt c) umfaßt:

c1) Bestimmten zweier Kreuzkorrelationskoeffizientenkurven T(z) und R(z) gemäß den Beziehungen:

$$[\ T(z)\ ]^m = \text{Prod}\ \prod_{n=1}^{n=m}\ [\ Pn(z+s_n)\ ]$$

$$[\ R(z)\ ]^m = \text{Prod}\ \prod_{n=1}^{n=m}\ [\ Pn(z-s_n)\ ]$$

c2) Festellen des Vorhandenseins von Frakturen ausgehend von den Spitzen der Kurve T(z) und R(z).

3. Verfahren nach einem der vorangehenden Ansprüche, dadurch gekennzeichnet, daß der Schritt b) umfaßt:

b1) Bestimmen der Kurven Mn(z) durch Filterung im mobilen Mittel der Amplitudenkurven An(z), und

b2) Bestimmen der Kurven Pn(z) durch strikte Subtraktion von Mn(z) in An(z), mit

Pn(z) = An(z) − Mn(z) wenn An(z) > Mn(z), und
Pn(z) = 0 wenn An(z) < Mn(z).

4. Verfahren nach Anspruch 3, dadurch gekennzeichnet, daß die Filterung im mobilen Mittel mit Hilfe eines auf fünf Punkten operierenden Mittelfilters realisiert wird.

5. Verfahren nach einem der vorangehenden Ansprüche, dadurch gekennzeichnet, daß der vorbestimmte Wert für die Breite der Amplitudenpunkte etwa einer Wellenlänge der Kompressionswelle entspricht, insbesondere 0,3 m für eine Welle von 16 KHz.

6. Verfahren nach einem der vorangehenden Ansprüche, dadurch gekennzeichnet, daß m mindestens gleich 3 ist.

7. Verfahren nach einem der vorangehenden Ansprüche, dadurch gekennzeichnet, daß die Amplitudengröße definiert wird als die maximale Spitze-Spitze-Amplitude der Wellenform WFn in dem Fenster.

## Claims

1. A method of detecting fractures in earth formations, comprising the step of processing echo waveforms WFn(z) which have been detected in a borehole as a function of depth $z$ by an acoustic tool including separate acoustic transducers for transmitting and receiving with $m$ transmitter-to-receiver spacings, $n$ being an index which varies from 1 to $m$ and related to said spacing and $s_n$ being the length of the corresponding half-spacing, characterized by the steps of:

a) extracting a compression amplitude magnitude from each waveform Wfn(z), in a selected window therof containing acoustic compression waves, and providing corresponding compression amplitude curve An(z);

b) isolating, from each compression amplitude curve An(z), amplitude peaks having a width close to a predetermined value, thereby obtaining amplitude peak curves Pn(z); and

c) determining the presence of fractures from a comparison of the curves Pn(z + $s_n$) and of curves Pn(z − $s_n$).

2. A method according to claim 1, characterized in that step c) comprises the steps of:

c1) determining two cross correlation coefficient curves T(z) and R(z) using the equations:

$$[\ T(z)\ ]^m\ =\ \underset{n\ =\ 1}{\overset{n\ =\ m}{Prod}}\ [\ Pn(z+s_n)\ ]$$

$$[\ R(z)\ ]^m\ =\ \underset{n\ =\ 1}{\overset{n\ =\ m}{Prod}}\ [\ Pn(z-s_n)\ ]$$

c2) determining the presence of fractures from the peaks in the curve T(z) and the curve R(z).

3. A method according to any one of the preceding claims, characterized in that step b) comprises the steps of:

b1) determining curves Mn(z) using a moving average filter on the amplitude curves An(z); and

b2) determining the peak curve Pn(z) by strict subtraction of Mn(z) from An(z), with

Pn(z) = An(z) − Mn(z) when An(z) > Mn(z), and
Pn(z) = 0 when An(z) < Mn(z).

4. A method according to claim 3, characterized in that the moving average filtering is performed by means of a median filter operating on five points.

5. A method according to any one of the preceding claims, characterized in that the predetermined value for the width of the amplitude peaks corresponds to about one wavelength of the compression acoustic wave, and in particular to about 0.3 m for an acoustic wave at 16 kHz.

6. A method according to any one of the preceding claims, characterized in that m is at least equal to 3.

7. A method according to any one of the preceding claims, characterized in that the amplitude magnitude is defined by the maximum peak-to-peak amplitude in the waveform WFn in said window.

FIG.1

LSS

R2

R1

$2.s_3$  $2s_2$  $2.s_1$  $2.s_2$

T1

T2

DE

FIG. 2A

Déplacement
(longitudinal)

Temps

FIG. 2B

WFn

Temps

Amplitude

Impulsion
d'émission

P1
Echos de
compression

P2
Echos de
cisaillement
et Rayleigh

P3
Echos de
boue

P4
Echos de
Stoneley

<u>FIG.3</u>

```
┌─────────────────────────────────┐
│  ACQUERIR LES FORMES D'ONDE     │
│  WFn (zi), AVEC Δz ≃ 15cm ET n  │──10
│     VARIABLE DE 1 A m           │
└─────────────────────────────────┘
                 │
                 ▼
┌─────────────────────────────────┐
│  POUR CHACUNE, DETERMINER L'     │
│  AMPLITUDE CRETE-A-CRETE         │──12
│  MAXIMALE DANS LA FENETRE DE     │
│  COMPRESSION; PRENDRE SON LOGA-  │
│  -RITHME, BASE 10, D'OU UNE SUITE│
│     D'ECHANTILLONS An (zi)       │
└─────────────────────────────────┘
                 │
                 ▼
┌─────────────────────────────────┐
│  LISSER An(zi) SUR 5 POINTS      │
│  EN MOYENNE MOBILE, D'OU         │──14
│      Mn (zi), pour chaque n.     │
└─────────────────────────────────┘
                 │
                 ▼
┌─────────────────────────────────┐
│  CALCULER Pn(zi) = An (zi) − Mn(zi) │──16
└─────────────────────────────────┘
                 │
                 ▼
             ◇
   18 ──   Pn (zi) ≤ 0   ── OUI ──┐
             ◇                      │
             │ NON          ┌──────────────┐
             │              │  Pn (zi) = 0 │──20
             │              └──────────────┘
             │◄─────────────────┘
             ▼
```

$$T(zi) = \sqrt[m]{\underset{m=1}{\overset{m=n}{Prod}} \left[ P_n(zi + s_n) \right]}$$

$$R(zi) = \sqrt[m]{\underset{m=1}{\overset{m=n}{Prod}} \left[ P_n(zi - s_n) \right]}$$

```
┌─────────────────────────────────┐
│  CALCULER Pn(zi−sn), Pn(zi−sn),  │
│                                  │──22
│   (équations ci-dessus)          │
└─────────────────────────────────┘
                 │
                 ▼
┌─────────────────────────────────┐
│  VISUALISER ENSEMBLE Pn (zi)     │──24
│   POUR LES m ESPACEMENTS,        │
│      T(zi) ET R(zi)              │
└─────────────────────────────────┘
```

# FIG. 4

PROFONDEUR : 8750.0 — 8690.0FT

TEMPS : 600.0 — 800.0 μS

FIG. 4a

FIG.4B

T (zi) ↑

R (zi) ↓

Pn (zi)

2600

An (zi)

EP 0 182 683 B1

## FIG.5

FIG.5A

FIG. 5 B

2600

EP 0 182 683 B1

# FIG. 6

30 — DEFINIR UNE FENETRE DE SOMMATION

32 — NORMALISER L'AMPLITUDE DE CHAQUE TRACE SUR SON MAXIMUM

34 — FILTRAGE DE MEDIANE EN PROFONDEUR POUR ELIMINER LES ECHOS DIRECTS

36 — DETERMINER LES INTERSECTIONS τ ET PENTES p D'UNE CONFIGURATION CROISEE DANS LA FENETRE, PUIS LES SOMMES DE LA FORME :
$$S(\tau.p) = \Sigma_i [V_i (\tau + p.z_i]^2$$

38 — CALCULER
$$E+ = \sum_{p>0} [S(\tau, p)] / N+$$
$$E- = \sum_{p<0} [S(\tau, p)] / N-$$
$$EX = \sqrt{E+ . E-}$$

40 — AUTRE FENETRE DE SOMMATION ?  OUI  NON

42 — VISUALISER LES "EX"

FIG. 7

PROFONDEUR : 8719.5 — 8707.5 FT
TEMPS : 700. 0 — 1250.0 ꭎS

EP 0 182 683 B1

FIG.8B

2600

EP 0 182 683 B1

## FIG.8A

T6

T5

T4

T3

T2

T1

2650                                                                2700